(19) Europäisches Patentamt
European Patent Office
Office européen des brevets

(11) **EP 4 661 347 A1**

(12) **EUROPEAN PATENT APPLICATION**
published in accordance with Art. 153(4) EPC

(43) Date of publication:
**10.12.2025 Bulletin 2025/50**

(21) Application number: **23919551.4**

(22) Date of filing: **27.12.2023**

(51) International Patent Classification (IPC):
***H04L 25/02*** *(2006.01)*

(52) Cooperative Patent Classification (CPC):
**H04L 25/02**

(86) International application number:
**PCT/CN2023/142532**

(87) International publication number:
**WO 2024/159991 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.02.2023 CN 202310118242**

(71) Applicant: **Datang Mobile Communications
Equipment Co., Ltd.
Beijing 100085 (CN)**

(72) Inventor: **SUN, Wenlong
Beijing 100085 (CN)**

(74) Representative: **Studio Torta S.p.A.
Via Viotti, 9
10121 Torino (IT)**

(54) **CHANNEL ESTIMATION METHOD AND APPARATUS, AND STORAGE MEDIUM**

(57) The present disclosure provides a channel estimation method and apparatus, and a storage medium. Within distributed RISs, after phase adjustment for RIS unit-cells on the RISs, RIS channels where different RISs are located correspond to different Doppler frequency shift information. Based on this, on a network device side, the channel estimation method includes: receiving a first pilot signal transmitted by a terminal over an uplink channel, where RIS unit-cells of a target RIS in the uplink channel have undergone phase adjustment; transforming the first pilot signal from a time-frequency domain to a delay-Doppler domain to obtain a second pilot signal; determining channel information of the uplink channel based on the second pilot signal, where the channel information includes Doppler frequency shift information of the uplink channel; and performing channel estimation based on the channel information, to obtain a channel estimation result of the uplink channel. Therefore, based on the fact that RIS channels where different RIS channels are located correspond to different Doppler frequency shift information, the Doppler frequency shift information is used to distinguish different RIS channels during channel estimation.

FIG. 2

## Description

The present disclosure claims priority to Chinese Patent Application No. 202310118242.X, entitled "CHANNEL ESTIMATION METHOD AND APPARATUS, AND STORAGE MEDIUM", filed with the China National Intellectual Property Administration on February 1, 2023, which is hereby incorporated by reference in its entirety.

## TECHNICAL FIELD

The present disclosure relates to the field of communication technologies, more particularly, to a channel estimation method and apparatus, and a storage medium.

## BACKGROUND

A reconfigurable intelligent surface (Reconfigurable Intelligent Surfaces, RIS) refers to an array composed of a plurality of RIS unit-cells. Due to the small size of an RIS unit-cell for a millimeter wave and higher frequency bands, a single ultra large-scale RIS containing thousands of RIS unit-cells still cannot fully utilize the blind compensation characteristics of RIS, and its role in blind compensation scenarios is limited. Therefore, it is necessary to utilize distributed RISs to ensure the service quality of RIS in a communication system.

Due to its passive characteristics, an RIS has a large number of units without signal processing capabilities. Moreover, an RIS channel is a cascaded channel, including a segment of channel from a terminal to an RIS and a segment of channel from the RIS to a network device, rather than a traditional single-segment channel. These characteristics make channel estimation difficult for an RIS channel. In related art, for channel estimation of distributed RISs, a time-frequency domain channel estimation method may be used to perform non-discriminative channel estimation on a plurality of RIS channels involved within the distributed RISs, or polling-based channel estimation may be performed by alternately turning on and off the RISs.

However, the above channel estimation methods are difficult to distinguish the channels where different RISs are located.

## SUMMARY

The present disclosure provides a channel estimation method and apparatus, and a storage medium for solving the problem of difficulty in distinguishing different RIS channels in a channel estimation method.

In a first aspect, the present disclosure provides a channel estimation method. In the method, within distributed RISs, after phase adjustment for RIS unit-cells on the RISs, RIS channels where different RISs are located correspond to different Doppler frequency shift information. On a network device side, the channel estimation method includes: receiving a first pilot signal transmitted by a terminal over an uplink channel, where RIS unit-cells of a target RIS in the uplink channel have undergone phase adjustment; transforming the first pilot signal from a time-frequency domain to a delay-Doppler domain to obtain a second pilot signal; determining channel information of the uplink channel based on the second pilot signal, where the channel information includes Doppler frequency shift information of the uplink channel; and performing channel estimation based on the channel information, to obtain a channel estimation result of the uplink channel.

In a possible implementation, a process of phase adjustment for the RIS unit-cells on the target RIS includes: adjusting phases of the RIS unit-cells on the target RIS through SMM.

In a possible implementation, within the distributed RISs, the RISs are configured with corresponding time-domain adjustment coefficients, and different RISs correspond to different time-domain adjustment coefficients. The adjusting the phases of the RIS unit-cells on the target RIS through SMM includes: adjusting, through SMM, the phases of the RIS unit-cells on the target RIS in a time domain based on a time-domain adjustment coefficient corresponding to the target RIS.

In a possible implementation, the adjusting, through SMM, the phases of the RIS unit-cells on the target RIS in the time domain based on the time-domain adjustment coefficient corresponding to the target RIS includes: acquiring a first beamforming matrix of the target RIS, where the first beamforming matrix is a beamforming matrix of the RIS unit-cells on the target RIS before SMM; determining a phase change value in the time domain based on the time-domain adjustment coefficient corresponding to the target RIS; and updating the phases of the RIS unit-cells in the first beamforming matrix based on the phase change value to obtain a second beamforming matrix, where element values of the second beamforming matrix are related to adjusted phases of the RIS unit-cells on the target RIS.

In a possible implementation, the determining the phase change value in the time domain based on the time-domain adjustment coefficient corresponding to the target RIS includes: determining a product of the time-domain adjustment coefficient corresponding to the target RIS and a current time as the phase change value.

In a possible implementation, within the distributed RISs, Doppler frequency shift ranges corresponding to the RIS channels where different RISs are located satisfy orthogonality, and the channel estimation method further includes: acquiring a Doppler frequency shift boundary value, where the Doppler frequency shift boundary value is a boundary value of Doppler frequency shift information caused by a movement of the terminal to a communication channel; for the distributed RISs, determining a characteristic Doppler value corresponding to a respective RIS based on the Doppler frequency shift boundary value, where the Doppler frequency shift boundary value and the characteristic Doppler value corresponding to the respective RIS reflect a Doppler frequency shift range corresponding to the respective RIS. Within the distributed RISs, the RIS channels where different RISs are located correspond to different characteristic Doppler values, so that Doppler frequency shift ranges corresponding to different RISs do not overlap. For the distributed RISs, updating a time-domain adjustment coefficient corresponding to the respective RIS based on the characteristic Doppler value corresponding the respective RIS to obtain an updated time-domain adjustment coefficient corresponding to the respective RIS. The adjusting, through SMM, the phases of the RIS unit-cells on the target RIS in the time domain based on the time-domain adjustment coefficient corresponding to the target RIS includes: adjusting, through SMM, the phases of the RIS unit-cells on the target RIS in the time domain based on an updated time-domain adjustment coefficient corresponding to the target RIS.

In a possible implementation, for the distributed RISs, the determining the characteristic Doppler value corresponding to the respective RIS based on the Doppler frequency shift boundary value includes: determining the characteristic Doppler value corresponding to the respective RIS based on a Doppler frequency shift upper limit, time-domain adjustment coefficients corresponding to the distributed RISs, and a number of RISs allowed by a communication system.

In a possible implementation, the receiving the first pilot signal transmitted by the terminal over the uplink channel includes: receiving the first pilot signal during a random access procedure of the uplink channel; or receiving the first pilot signal upon successful completion of random access on the uplink channel; or receiving the first pilot signal upon optimization and adjustment of the target RIS.

In a possible implementation, the transforming the first pilot signal from the time-frequency domain to the delay-Doppler domain to obtain the second pilot signal includes: transforming the first pilot signal from the time-frequency domain to the delay-Doppler domain by performing SFFT on the first pilot signal, to obtain the second pilot signal.

In a possible implementation, the first pilot signal is a signal receiving matrix in the time-frequency domain, and element values in the first pilot signal are all non-zero. The second pilot signal is a signal receiving matrix in the delay-Doppler domain, the second pilot signal is represented as a product of an energy normalization matrix and a reference matrix, where a first element value of the reference matrix is non-zero, and remaining element values of the reference matrix except for the first element value are zero.

In a possible implementation, the determining the channel information of the uplink channel based on the second pilot signal includes: filtering the second pilot signal; and determining the channel information based on the filtered second pilot signal.

In a possible implementation, the filtering the second pilot signal includes: filtering the second pilot signal according to a configured threshold.

In a second aspect, the present disclosure provides a channel estimation apparatus. Within distributed RISs, after phase adjustment for RIS unit-cells on the RISs, RIS channels where different RISs are located correspond to different Doppler frequency shift information. On a network device side, the channel estimation apparatus includes a memory, a transceiver, and a processor; where

the memory is configured to store a computer program;
the transceiver is configured to transmit and receive data under a control of the processor;
the processor is configured to read the computer program from the memory and perform following operations:
receiving a first pilot signal transmitted by a terminal over an uplink channel, where RIS unit-cells of a target RIS in the uplink channel have undergone phase adjustment; transforming the first pilot signal from a time-frequency domain to a delay-Doppler domain to obtain a second pilot signal; determining channel information of the uplink channel based on the second pilot signal, where the channel information includes Doppler frequency shift information of the uplink channel; and performing channel estimation based on the channel information, to obtain a channel estimation result of the uplink channel.

In a possible implementation, a process of phase adjustment for the RIS unit-cells on the target RIS includes: adjusting phases of the RIS unit-cells on the target RIS through SMM.

In a possible implementation, within the distributed RISs, the RISs are configured with corresponding time-domain adjustment coefficients, and different RISs correspond to different time-domain adjustment coefficients. The adjusting, through SMM, the phases of the RIS unit-cells on the target RIS includes: adjusting, through SMM, the phases of the RIS unit-cells on the target RIS in a time domain based on a time-domain adjustment coefficient corresponding to the target RIS.

In a possible implementation, the adjusting, through SMM, the phases of the RIS unit-cells on the target RIS in the time domain based on the time-domain adjustment coefficient corresponding to the target RIS includes: acquiring a first beamforming matrix of the target RIS, where the first beamforming matrix is a beamforming matrix of the RIS unit-cells on the target RIS before SMM; determining a phase change value in the time domain based on the time-domain adjustment coefficient corresponding to the target RIS; and updating the phases of the RIS unit-cells in the first beamforming matrix based on the phase change value to obtain a second beamforming matrix, where element values of the second beamforming matrix are related to adjusted phases of the RIS unit-cells on the target RIS.

In a possible implementation, the determining the phase change value in the time domain based on the time-domain adjustment coefficient corresponding to the target RIS includes: determining a product of the time-domain adjustment coefficient corresponding to the target RIS and a current time as the phase change value.

In a possible implementation, within the distributed RISs, Doppler frequency shift ranges corresponding to the RIS channels where different RISs are located satisfy orthogonality, and a process of constructing the orthogonality includes: acquiring a Doppler frequency shift boundary value, where the Doppler frequency shift boundary value is a boundary value of Doppler frequency shift information caused by a movement of the terminal to a communication channel; for the distributed RISs, determining a characteristic Doppler value corresponding to a respective RIS based on the Doppler frequency shift boundary value, where the Doppler frequency shift boundary value and the characteristic Doppler value corresponding to the respective RIS reflect a Doppler frequency shift range corresponding to the respective RIS, within the distributed RISs, the RIS channels where different RISs are located correspond to different characteristic Doppler values, so that Doppler frequency shift ranges corresponding to different RISs do not overlap; and for the distributed RISs, updating a time-domain adjustment coefficient corresponding to the respective RIS based on the characteristic Doppler value corresponding the respective RIS to obtain an updated time-domain adjustment coefficient corresponding to the respective RIS. The adjusting, through SMM, the phases of the RIS unit-cells on the target RIS in the time domain based on the time-domain adjustment coefficient corresponding to the target RIS includes: adjusting, through SMM, the phases of the RIS unit-cells on the target RIS in the time domain based on an updated time-domain adjustment coefficient corresponding to the target RIS.

In a possible implementation, for the distributed RISs, the determining the characteristic Doppler value corresponding to the respective RIS based on the Doppler frequency shift boundary value includes: determining the characteristic Doppler value corresponding to the respective RIS based on a Doppler frequency shift upper limit, time-domain adjustment coefficients corresponding to the distributed RISs, and a number of RISs allowed by a communication system.

In a possible implementation, during a process of receiving the first pilot signal transmitted by the terminal over the uplink channel, the processor is configured to perform following operations: receiving the first pilot signal during a random access procedure of the uplink channel; or receiving the first pilot signal upon successful completion of random access on the uplink channel; or receiving the first pilot signal upon optimization and adjustment of the target RIS.

In a possible implementation, during a process of transforming the first pilot signal from the time-frequency domain to the delay-Doppler domain to obtain the second pilot signal, the processor is configured to perform following operations: transforming the first pilot signal from the time-frequency domain to the delay-Doppler domain by performing SFFT on the first pilot signal, to obtain the second pilot signal.

In a possible implementation, the first pilot signal is a signal receiving matrix in the time-frequency domain, and element values in the first pilot signal are all non-zero. The second pilot signal is a signal receiving matrix in the delay-Doppler domain, and the second pilot signal is represented as a product of an energy normalization matrix and a reference matrix, where a first element value of the reference matrix is non-zero, and remaining element values of the reference matrix except for the first element value are zero.

In a possible implementation, during a process of determining the channel information of the uplink channel based on the second pilot signal, the processor is configured to perform following operations: filtering the second pilot signal; and determining the channel information based on the filtered second pilot signal.

In a possible implementation, during a process of filtering the second pilot signal, the processor is configured to perform following operations: filtering the second pilot signal according to a configured threshold.

In a third aspect, the present disclosure provides a channel estimation apparatus. Within distributed RISs, after phase adjustment for RIS unit-cells on the RISs, RIS channels where different RISs are located correspond to different Doppler frequency shift information. On a network device side, the channel estimation apparatus includes: a receiving unit, configured to receive a first pilot signal transmitted by a terminal over an uplink channel, where RIS unit-cells of a target RIS in the uplink channel have undergone phase adjustment; a transforming unit, configured to transform the first pilot signal from a time-frequency domain to a delay-Doppler domain to obtain a second pilot signal; a determining unit, configured to determine channel information of the uplink channel based on the second pilot signal, where the channel information includes Doppler frequency shift information of the uplink channel; and an estimating unit, configured to perform channel estimation based on the channel information, to obtain a channel estimation result of the uplink channel.

In a possible implementation, a process of phase adjustment for the RIS unit-cells on the target RIS includes:

adjusting phases of the RIS unit-cells on the target RIS through spatial multi-modulation SMM.

In a possible implementation, within the distributed RISs, the RISs are configured with corresponding time-domain adjustment coefficients, and different RISs correspond to different time-domain adjustment coefficients. The adjusting, through SMM, the phases of the RIS unit-cells on the target RIS includes: adjusting, through SMM, the phases of the RIS unit-cells on the target RIS in a time domain based on a time-domain adjustment coefficient corresponding to the target RIS.

In a possible implementation, the adjusting, through SMM, the phases of the RIS unit-cells on the target RIS in the time domain based on the time-domain adjustment coefficient corresponding to the target RIS includes: acquiring a first beamforming matrix of the target RIS, where the first beamforming matrix is a beamforming matrix of the RIS unit-cells on the target RIS before SMM; determining a phase change value in the time domain based on the time-domain adjustment coefficient corresponding to the target RIS; and updating the phases of the RIS unit-cells in the first beamforming matrix based on the phase change value to obtain a second beamforming matrix, where element values of the second beamforming matrix are related to adjusted phases of the RIS unit-cells on the target RIS.

In a possible implementation, the determining the phase change value in the time domain based on the time-domain adjustment coefficient corresponding to the target RIS includes: determining a product of the time-domain adjustment coefficient corresponding to the target RIS and a current time as the phase change value.

In a possible implementation, within the distributed RISs, Doppler frequency shift ranges corresponding to the RIS channels where different RISs are located satisfy orthogonality, and the channel estimation method further includes: acquiring a Doppler frequency shift boundary value, where the Doppler frequency shift boundary value is a boundary value of Doppler frequency shift information caused by a movement of the terminal to a communication channel; for the distributed RISs, determining a characteristic Doppler value corresponding to a respective RIS based on the Doppler frequency shift boundary value, where the Doppler frequency shift boundary value and the characteristic Doppler value corresponding to the respective RIS reflect a Doppler frequency shift range corresponding to the respective RIS. Within the distributed RISs, the RIS channels where different RISs are located correspond to different characteristic Doppler values, so that Doppler frequency shift ranges corresponding to different RISs do not overlap. For the distributed RISs, updating a time-domain adjustment coefficient corresponding to the respective RIS based on the characteristic Doppler value corresponding the respective RIS to obtain an updated time-domain adjustment coefficient corresponding to the respective RIS. The adjusting, through SMM, the phases of the RIS unit-cells on the target RIS in the time domain based on the time-domain adjustment coefficient corresponding to the target RIS includes: adjusting, through SMM, the phases of the RIS unit-cells on the target RIS in the time domain based on an updated time-domain adjustment coefficient corresponding to the target RIS.

In a possible implementation, for the distributed RISs, the determining the characteristic Doppler value corresponding to the respective RIS based on the Doppler frequency shift boundary value includes: determining the characteristic Doppler value corresponding to the respective RIS based on a Doppler frequency shift upper limit, time-domain adjustment coefficients corresponding to the distributed RISs, and a number of RISs allowed by a communication system.

In a possible implementation, the receiving unit is specifically configured to: receive the first pilot signal during a random access procedure of the uplink channel; or receive the first pilot signal upon successful completion of random access on the uplink channel; or receive the first pilot signal upon optimization and adjustment of the target RIS.

In a possible implementation, the transforming unit is specifically configured to: transform the first pilot signal from the time-frequency domain to the delay-Doppler domain by performing SFFT on the first pilot signal, to obtain the second pilot signal.

In a possible implementation, the first pilot signal is a signal receiving matrix in the time-frequency domain, and element values in the first pilot signal are all non-zero. The second pilot signal is a signal receiving matrix in the delay-Doppler domain, the second pilot signal is represented as a product of an energy normalization matrix and a reference matrix, where a first element value of the reference matrix is non-zero, and remaining element values of the reference matrix except for the first element value are zero.

In a possible implementation, the determining unit is specifically configured to: filter the second pilot signal, and determine the channel information based on the filtered second pilot signal.

In a possible implementation, the determining unit is specifically configured to filter the second pilot signal according to a configured threshold.

In a fourth aspect, the present disclosure provides a processor-readable storage medium storing a computer program for enabling a processor to execute the channel estimation method provided in the first aspect.

In a fifth aspect, the present disclosure provides a computer program product including instructions that, when executed on a computer, enable the computer to perform the channel estimation method provided in the first aspect.

In a sixth aspect, the present disclosure provides a communication system including any of the network devices described above.

According to the information estimation method and apparatus, and a storage medium provided in the present disclosure, within distributed RISs, after phase adjustment for RIS unit-cells on the RISs, RIS channels where different RISs are located correspond to different Doppler frequency shift information. Therefore, within the distributed RISs, different RIS channels can be distinguished based on Doppler frequency shift information. In the channel estimation method, the network device may receive a first pilot signal transmitted by a terminal over an uplink channel, where RIS unit-cells of a target RIS in the uplink channel have undergone phase adjustment. It can be understood that the uplink channel is an RIS channel where the target RIS within the distributed RISs is located. The network device may transform the first pilot signal from a time-frequency domain to a delay-Doppler domain to obtain a second pilot signal, so that to obtain the Doppler frequency shift information of the uplink channel in the delay-Doppler domain. The network device may determine channel information of the uplink channel based on the second pilot signal, and perform channel estimation based on the channel information, to obtain a channel estimation result of the uplink channel. Therefore, during channel estimation, it is possible to distinguish RIS channels based on the Doppler frequency shift information of the RIS channels where the distributed RISs are located, thereby improving the accuracy of channel estimation.

It should be understood that the content described in the summary section is not intended to limit the key or important features of the embodiments of the present disclosure, nor is it intended to limit the scope of the disclosure. The other features disclosed herein will become easily understood through the following description.

## BRIEF DESCRIPTION OF DRAWINGS

In order to more clearly describe the technical solution in embodiments of the present disclosure or the prior art, in the following, the drawings that need to be used in the description of the embodiments or the prior art will be briefly introduced. Apparently, the drawings in the following description are a part of embodiments of the present disclosure. For the persons of ordinary skill in the art, other drawings can be obtained based on these drawings without paying creative labor.

FIG. 1 is an example diagram of a communication system provided in an embodiment of the present disclosure.
FIG. 2 is a schematic diagram I of a channel estimation method provided in an embodiment of the present disclosure.
FIG. 3 is a schematic diagram of a process of adjusting phases of RIS unit-cells of a target RIS in a channel estimation method provided in an embodiment of the present disclosure.
FIG. 4 is an example diagram of a signal represented in a delay-Doppler domain.
FIG. 5 is a schematic structural diagram I of a channel estimation apparatus provided in an embodiment of the present disclosure.
FIG. 6 is a schematic structural diagram II of a channel estimation apparatus provided in an embodiment of the present disclosure.

## DESCRIPTION OF EMBODIMENTS

In the present disclosure, "at least one" refers to one or more, and "a plurality of" refers to two or more. "And/or" describes an association relationship between associated objects, indicating that there may be three types of relationships, for example, A and/or B, which may represent the situations: A exists alone, A and B exist simultaneously, and B exists alone, where A and B may be singular or plural. The character "/" generally signifies an "or" relationship between the associated objects preceding and following it. The phrase "at least one of the following" or similar expressions refer to any combination of the listed items, encompassing either a single item or multiple items in any grouping. For example, at least one of a, b, or c, may denote: a, b, c, a-b, a-c, b-c, or a-b-c, where a, b, c may each represent a single entity or multiple entities.

It can be understood that steps or operations in embodiments of the present disclosure are only examples, and other operations or variations of various operations may also be performed in the embodiments of the present disclosure. In addition, the steps may be executed in a different order than that presented in the embodiments of the present disclosure, and it may not be necessary to perform all the operations in the embodiments of the present disclosure.

In the following, a clear and complete description of the technical solutions in the embodiments of the present disclosure will be provided with reference to the accompanying drawings. Apparently, the described embodiments are only a part of the embodiments of the present disclosure, but not all embodiments. Based on the embodiments in the present disclosure, all other embodiments obtained by persons of ordinary skill in the art without paying creative labor are within the scope of protection of the present disclosure.

The technical solution provided in the embodiments of the present disclosure can be applied to various systems, especially a 5G system or a 6G system. For example, an applicable system of the embodiments of the present disclosure may be a global system of mobile communication (Global System of Mobile Communication, GSM) system, a code division multiple access (Code Division Multiple Access, CDMA) system, wideband code division multiple access (Wideband Code Division Multiple Access, WCDMA), a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunication system (Universal Mobile Telecommunication System, UMTS), a worldwide interoperability for microwave access (Worldwide Interoperability for Microwave Access, WiMAX) system, a 5G new radio (New Radio, NR) system, and etc. All of these systems include a terminal and a network device. The systems can also include a core network component, such as an evolved packet system (Evolved Packet System, EPS), a 5G System (5GS), and etc.

The terminal involved in the embodiments of the present disclosure may be a device that provides voice and/or data connectivity to a user, a handheld device with wireless connection functions, or another processing device connected to a wireless modem. In different systems, the names of the terminal may also be different. For example, in a 5G system, the terminal may be called as a user equipment (User Equipment, UE). The wireless terminal may communicate with one or more core networks (Core Network, CN) through a RAN (Radio Access Network, RAN). The wireless terminal may be a mobile terminal, such as a mobile phone (or a "cellular" phone) and a computer with a mobile terminal. For example, it may be a portable, pocket, handheld, computer-built or vehicle-mounted mobile apparatus, which exchanges language and/or data with the wireless access network. For example, a personal communication service (Personal Communication Service, PCS) telephone, a cordless telephone, a session initiation protocol (Session Initiated Protocol, SIP) telephone, a wireless local loop (Wireless Local Loop, WLL) station, a personal digital assistant (Personal Digital Assistant, PDA) or other devices. The wireless terminal may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), which is not limited in the embodiments of the present disclosure.

The network device involved in the embodiments of the disclosure may be a base station, which may include multiple cells that provide services to a terminal. Depending on the specific application scenario, the base station may also be called an access point, a device in the access network that communicates with a wireless terminal through one or more sectors over the air interface, or it may have other names. The network device may be configured to exchange a received air frame with an Internet protocol (Internet Protocol, IP) packet, worked as a router between the wireless terminal and the rest of the access network, where the rest of the access network may include an Internet protocol (IP) communication network. The network device may further coordinate an attribute management of an air interface. For example, the network device involved in the embodiments of the present disclosure may be a network device (Base Transceiver Station, BTS) in a global system of mobile communication (Global System for Mobile communications, GSM) or a code division multiple access (Code Division Multiple Access, CDMA), a network device (NodeB) in a wideband code division multiple access (Wide-band Code Division Multiple Access, WCDMA), an evolutional network device (evolutional Node B, eNB or e-NodeB) in a long term evolution (long term evolution, LTE) system, a 5G base station (gNB) in a 5G system architecture (next generation system), a home evolved network device (Home evolved Node B, HeNB), a relay node (relay node), a femtocell (femto), a picocell (pico), etc., which are not limited in the embodiments of the present disclosure. In some network architectures, the network device may include a central unit (central unit, CU) node and a distributed unit (distributed unit, DU) node, the central unit and the distributed unit may be geographically arranged together or separately.

The reconfigure intelligent surface (Reconfigure Intelligent Surfaces, short for RIS) in the embodiments of the present disclosure refers to an array composed of a plurality of RIS unit-cells. The RIS unit-cells are reflective units containing metamaterials and their phases are adjustable. As a candidate technology for further development of communication systems, techniques of channel estimation and signal adjustment for RISs are currently hot research topics.

A plurality of RISs may be distributed in a communication system to improve the blind compensation effect of RIS, but it also brings greater challenges to channel estimation in the communication system. On the one hand, due to its passive characteristics, the RIS has a large number of units without signal processing capabilities, and the uplink channel where the RIS is located is a typical cascaded channel, including an uplink channel from a base station to the RIS and an uplink channel from the RIS to a user, rather than a traditional single-segment channel, this structure introduces difficulties in channel estimation. On the other hand, for multiblock distributed RISs, it is difficult to completely distinguish channels where different RISs are located, which also creates greater difficulties in channel estimation.

In related art, the number of pilots required for channel estimation is proportional to the number of RIS unit-cells, and even proportional to the square of the number of RIS unit-cells, resulting in substantial pilot overhead, and rendering it impossible to fully distinguish the channels where different RISs are located. For example, a time-frequency domain channel estimation method may be used to perform non-discriminative channel estimation on a plurality of RIS channels. For another example, polling-based channel estimation may be performed by alternately turning on and off the RISs. However, this approach is inefficient and difficult to implement in a practical application.

The inventor recognized that the above methods essentially fail to fully utilize space domain information of distributed RISs, and neglect the characteristic of RIS channels being dominated by line of sights. Based on this insight, embodiments of the present disclosure provide a channel estimation method and apparatus, a device, and a storage medium. In the embodiments of the present disclosure, within distributed RISs, after phase adjustment for RIS unit-cells on the RISs, RIS channels where different RISs are located correspond to different Doppler frequency shift information. This leverages two key characteristics: RIS unit-cells of different RISs being independent in a space domain, while RIS unit-cells of the same RIS being correlated in the space domain, which allows assigning different Doppler frequency shift information to RIS channels corresponding to different RISs; RIS channels being dominated by line-of-sights, which enables changing Doppler frequency shift information of an RIS channel by changing phases of RIS unit-cells. During channel estimation: a pilot signal can be transformed from a delay domain to a Doppler domain, channel information including Doppler frequency shift information is obtained based on the transformed pilot signal in the Doppler domain; channel estimation is performed using the channel information. In an aspect, the Doppler frequency shift information is used for distinguishing the RIS channels where different RISs are located during the channel estimation. In another aspect, channel estimation for the RIS channels can be achieved using only a single pilot signal, significantly reducing the pilot overhead required for channel estimation.

Among them, the method and the apparatus are based on the same application concept. Due to the similarity in the principle of problem-solving between the method and apparatus, the implementation of the apparatus and method can be referred to each other, and the repetition will not be repeated.

Based on the above technical concept, the application scenarios of the embodiment of the present disclosure are as follows.

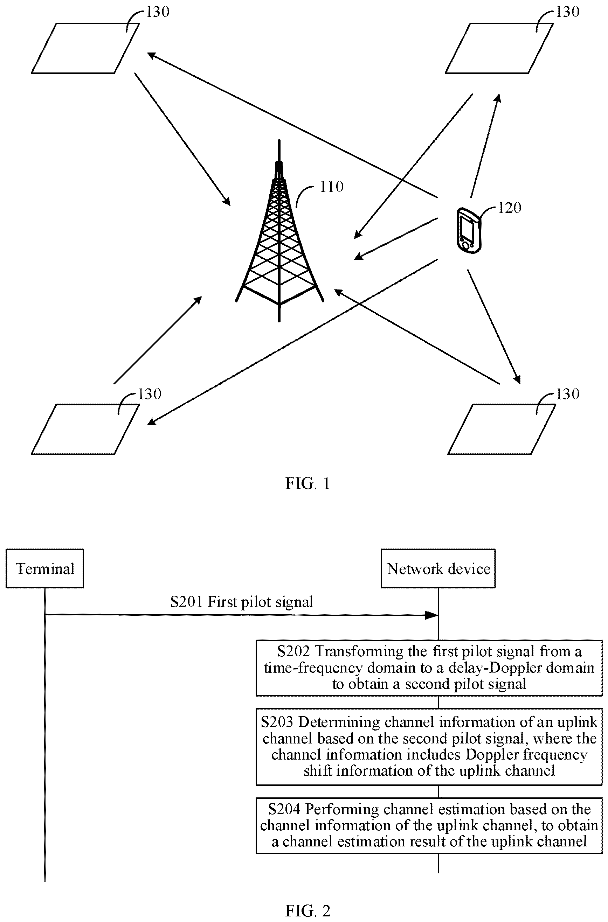

FIG. 1 is an example diagram of a communication system provided in an embodiment of the present disclosure. As shown in FIG. 1, the communication system involved in this embodiment includes a network device 110, a terminal 120, and a plurality of distributed RISs (in FIG. 1, four randomly accessed successful RISs 130 are taken as an example, and the distributed RISs may also include other RISs that failed in random access due to factors such as an initial phase, a spatial distribution, or other reasons).

As shown in FIG. 1, in this application scenario, there is a direct uplink channel from the terminal 120 to the network device 110, as well as an uplink channel including a segment of channel from the terminal 120 to the RIS 130 and a segment of channel from the RIS 130 to the network device 110. It can be seen that the RIS 130 can provide an additional uplink channel for the terminal when the direct uplink channel for the terminal is blocked, this improves the blind compensation effect.

Among them, a location of the network device 110, a location of the RIS 130, and a relative location between the network device 110 and the RIS 130 corresponding to the network device 110 are known for the network device 110. Both the network device 110 and the terminal 120 can adopt a minimalist architecture design with a single antenna, which can greatly simplify the signal processing complexity of a signal receiving end and a signal transmitting end. In this communication system, the main beamforming function is implemented by the RIS 130.

As an example, the transmission and reception signal model of the above uplink channel may be expressed as:

$$y = \left[ \sum_{i=1}^{S} (G_i \varphi_i H_i) + H_d \right] x + n_0$$

Among them, $H_d \in \mathbb{C}^{1 \times 1}$ represents a direct channel (i.e., the direct uplink channel from the terminal to the network device), and $\mathbb{C}^{1 \times 1}$ represents a complex matrix with a dimension of $1 \times 1$; $H_i \in \mathbb{C}^{M_i \times 1}$ represents a channel from the terminal to an i-th RIS, $\mathbb{C}^{M_i \times 1}$ represents a complex matrix with a dimension of $M_i \times 1$, and $M_i$ is the number of RIS unit-cells of the i-th RIS; $G_i \in \mathbb{C}^{1 \times M_i}$ represents a channel from the i-th RIS to the network device; x represents a transmission signal, y represents a reception signal, and the transmission signal and the reception signal may be pilot signals or communication signals carrying communication information; S represents the number of RISs which have successfully performed random access; $\varphi_i$ is a beamforming matrix of the i-th RIS, which can be used to adjust phases of RIS unit-cells of the RIS to change the Doppler frequency shift information of the channel where the RIS is located; $n_0$ represents random noise.

Using the channel characterization form of the delay-Doppler domain, the above transmission and reception signal model of the uplink channel may be expressed as:

$$h(\tau, \upsilon) = \sum_{p=1}^{P} h_p \delta(\tau - \tau_p) \delta\left(\upsilon - \upsilon_p\right)$$

Among them, $h_p$ is a complex variable representing a channel coefficient of a p-th path (i.e., the p-th uplink channel), $\tau_p$ represents a delay of the p-th path, $\upsilon_p$ represents Doppler frequency shift information of the p-th path, $\tau$ represents a delay variable, $\upsilon$ represents a Doppler frequency shift variable, and there are P different paths in total. This model may be further refined to a level of each RIS unit-cell of each RIS. Therefore, Doppler frequency shift information of the uplink channel can be changed by phase adjustment for the RIS unit-cells.

The channel estimation method provided according to the embodiments of the present disclosure will be described below with reference to FIG. 2 to FIG. 4 and in combination with the application scenario of FIG. 1. It should be noted that the above application scenarios are only shown for the convenience of understanding the spirit and principles of the present disclosure, and the embodiments of the present disclosure can also be applied to any applicable scenario.

FIG. 2 is a schematic diagram I of a channel estimation method provided in an embodiment of the present disclosure, which is applied to a network device side. As shown in FIG. 2, the channel estimation method of this embodiment may include the following.

S201, the network device receives a first pilot signal transmitted by a terminal over an uplink channel, where RIS unit-cells of a target RIS in the uplink channel have undergone phase adjustment.

Among them, the uplink channel includes a channel from the terminal to an RIS and a channel from the RIS to the network device. For ease of distinction, a received pilot signal is referred to as the first pilot signal, an RIS in the uplink channel over which the first pilot signal is transmitted is referred to as the target RIS, and the uplink channel is the RIS channel where the target RIS is located.

Among them, the target RIS is located within the distributed RISs. Within the distributed RISs, after phase adjustment for RIS unit-cells on the RISs, RIS channels where different RISs are located correspond to different Doppler frequency shift information. The Doppler frequency shift information can be used to distinguish the RIS channels where different RISs are located. The Doppler frequency shift information, also known as Doppler frequency shift, is related data that reflects the Doppler frequency shift.

In the case where a plurality of distributed RISs are deployed in a communication system, the network device may receive pilot signals transmitted over RIS channels where the plurality of RISs are located. For example, the network device may receive a pilot signal transmitted by a terminal a1 over an uplink channel, and a pilot signal transmitted by a terminal a2 over another uplink channel. If the network device can obtain Doppler frequency shift information of each uplink channel during channel estimation, it can distinguish the RIS channels where different RISs are located.

In this embodiment, in the communication system, the terminal may transmit the first pilot signal to the network device over the uplink channel (i.e., the RIS channel where the target RIS is located). After receiving the first pilot signal, the network device can determine the Doppler frequency shift information of the uplink channel based on the first pilot signal and perform channel estimation for the uplink channel.

S202, the network device transforms the first pilot signal from a time-frequency domain to a delay-Doppler domain to obtain a second pilot signal.

Among them, the time-frequency domain describes the channel condition in dimensions of time and frequency, while the delay-Doppler domain describes the channel condition in dimensions of time and Doppler frequency shift.

In this embodiment, the first pilot signal received by the network device is a pilot signal in the time-frequency domain. The first pilot signal is transformed from the time-frequency domain to the delay-Doppler domain to obtain the transformed first pilot signal. For simplicity and ease of distinction, the transformed first pilot signal is referred to as the second pilot signal.

S203, the network device determines channel information of the uplink channel based on the second pilot signal, where the channel information includes Doppler frequency shift information of the uplink channel.

In this embodiment, for the second pilot signal in the delay-Doppler domain, the network device may acquire data of the second pilot signal in the dimension of Doppler frequency shift to obtain Doppler frequency shift information of the uplink channel. The Doppler frequency shift information of the uplink channel is different from those of RIS channels where other RISs are located, so the network device can distinguish this uplink channel from RIS channels where other RISs are located based on the Doppler frequency shift information of the uplink channel.

S204, the network device performs channel estimation based on the channel information of the uplink channel, to obtain a channel estimation result of the uplink channel.

In this embodiment, in addition to the Doppler frequency shift information of the uplink channel, the channel information of the uplink channel may further include other data used for channel estimation. The network device may perform channel estimation for the uplink channel based on the channel information of the uplink channel and obtain a channel estimation result of the uplink channel. Since the specific channel estimation process is not the focus of the embodiments of the present disclosure, it will not be described in detail here.

In the embodiments of the present disclosure, based on the principle that "after phase adjustment for RIS unit-cells of distributed RISs, RIS channels where different RISs are located correspond to different Doppler frequency shift information", during channel estimation, Doppler frequency shift information of an uplink channel is determined by transforming a pilot signal from the time-frequency domain to the delay-Doppler domain. This allows for distinguishing between different RIS channels where different RISs are located based on the Doppler frequency shift information of the uplink channel, and channel estimation can be achieved using a single pilot signal, thereby reducing the pilot overhead.

It should be noted that phase adjustment may be performed on the RIS unit-cells of the distributed RISs in advance, it is not necessary to perform phase adjustment for the RIS unit-cells of the distributed RISs during each channel estimation process.

In some embodiments, phase adjustment for the RIS unit-cells of the distributed RISs may be achieved through spatial multi-modulation (Spatial Multi-Modulation, SMM), which includes adjusting phases of the RIS unit-cells on the target RIS through SMM. This helps improve the phase adjustment effect of the RIS unit-cells on the RISs.

Among them, SMM is a modulation method in which an amplitude of a signal and/or a phase of a signal is modulated.

When applied to distributed RISs, SMM can utilize the spatial characteristics of the distributed RISs to perform uniform phase adjustment on RIS unit-cells of the same RIS. This ensures that a phase difference between RIS unit-cells on the same RIS remains unchanged, without affecting the beamforming ability of the RIS. SMM perform phase adjustment on RIS unit-cells of different RIS to varying degrees, so that RIS channels where different RISs are located correspond to different Doppler frequency shift information. Therefore, the phase adjustment effect of the RIS unit-cells on the RISs is improved.

In some embodiments, within the distributed RISs, the RISs are configured with corresponding time-domain adjustment coefficients, and different RISs correspond to different time-domain adjustment coefficients. Based on this, the adjusting phases of the RIS unit-cells on the target RIS through SMM may include: adjusting, through SMM, the phases of the RIS unit-cells on the target RIS in a time domain based on a time-domain adjustment coefficient corresponding to the target RIS.

Among them, the time-domain adjustment coefficient is used to indicate a time change rate for a phase of an RIS unit-cell.

Among them, the RISs are configured with corresponding time-domain adjustment coefficients. During phase adjustment, phases of RIS unit-cells on an RIS change according to a time-domain adjustment coefficient corresponding to the RIS, and time change rates for phases of RIS unit-cells on the same RIS are consistent, so that phase adjustment does not affect the beamforming ability of the RIS; while different RISs correspond to different time-domain adjustment coefficients, so that RIS channels where different RISs are located correspond to different Doppler frequency shift information. In this way, by utilizing the spatial characteristics of the RIS and performing spatial-temporal multi-modulation for the distributed RISs through SMM, signals transmitted over RIS channels where different RISs are located can be distinguished at a receiving end. This enables the network device to distinguish the RIS channels where different RISs are located based on the pilot signals during channel estimation, thereby improving the accuracy of channel estimation.

In this embodiment, phase adjustment for the RIS unit-cells of the distributed RISs can be achieved through SMM. An example is taken where RIS unit-cells on the target RIS are adjusted through SMM, the network device can acquire the time-domain adjustment coefficient corresponding to the target RIS, and adjust the phases of the RIS unit-cells on the target RIS in the time domain based on this time-domain adjustment coefficient. The target RIS after phase adjustment may participate in signal transmission.

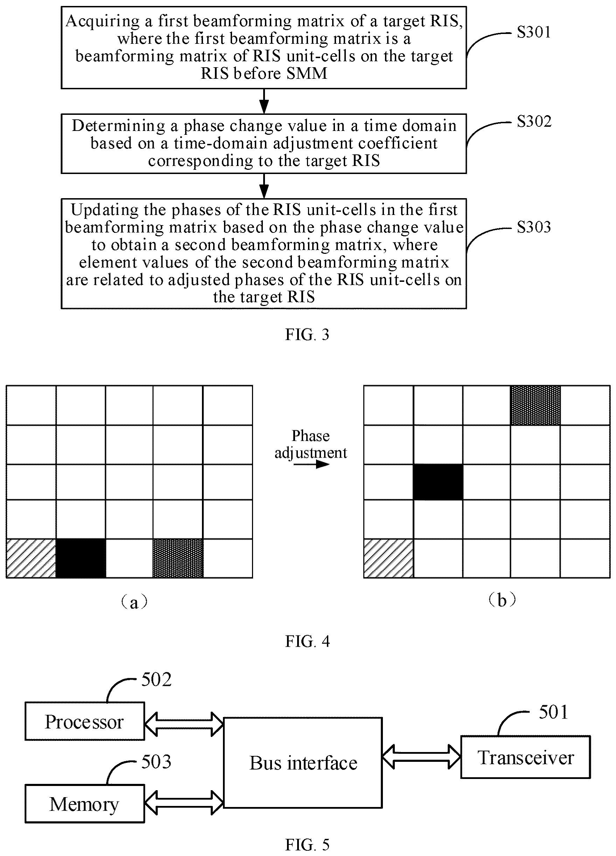

Within distributed RISs, the RISs are configured with corresponding time-domain adjustment coefficients, and different RISs corresponding to different time-domain adjustment coefficients. FIG. 3 is a schematic diagram of a process of adjusting phases of RIS unit-cells of a target RIS in a channel estimation method provided in an embodiment of the present disclosure. As shown in FIG. 3, the process of adjusting the phases of the RIS unit-cells on the target RIS in the channel estimation method may include the following.

S301, acquiring a first beamforming matrix of the target RIS, where the first beamforming matrix is a beamforming matrix of the RIS unit-cells on the target RIS before SMM.

Among them, element values in the first beamforming matrix correspond to the RIS unit-cells on the target RIS one-by-one. The element values in the first beamforming matrix may include the phases of corresponding RIS unit-cells.

In this embodiment, an initial beamforming matrix of the target RIS may be acquired, which is the first beamforming matrix. Alternatively, during a random access procedure of the target RIS (i.e. a random access procedure of the RIS channel where the target RIS is located), or after a successful random access of the target RIS (i.e. a successful random access of the RIS channel where the target RIS is located), the phases of the RIS unit-cells on the target RIS may be optimized due to factors such as an initial phase, a spatial distribution or other reasons, and the optimized beamforming matrix of the target RIS can be acquired and taken as the first beamforming matrix.

S302, determining a phase change value in the time domain based on the time-domain adjustment coefficient corresponding to the target RIS.

In this embodiment, since the time-domain adjustment coefficient corresponding to the target RIS reflects the time change rate for the phases of the RIS unit-cells on the target RIS, the phase change values of the RIS unit-cells on the target RIS in the time domain may be determined based on the time-domain adjustment coefficient corresponding to the target RIS and a current time. Among them, all the RIS unit-cells on the target RIS may correspond to the same phase change value to ensure that the phase difference among all RIS unit-cells on the target RIS remains unchanged, thereby ensuring that the beamforming ability of the target RIS is not affected. Among them, the current time is a time of phase adjustment for the RIS unit-cells on the target RIS.

In a possible implementation, a product of the time-domain adjustment coefficient corresponding to the target RIS and the current time may be determined as the phase change value. At this point, the time-domain adjustment coefficient corresponding to the target RIS is the time change rate for the phases of the RIS unit-cells on the target RIS. Therefore, within the distributed RISs, the phases of RIS unit-cells on different RISs are regulated at different time change rates, and the phases of RIS unit-cells on the same RIS are regulated at the same time change rate, thus achieving spatial-temporal multi-modulation, thereby rendering the Doppler frequency shift information of the RIS channels where different RISs are located to be different.

S303, updating the phases of the RIS unit-cells in the first beamforming matrix based on the phase change value to obtain a second beamforming matrix, where element values of the second beamforming matrix are related to adjusted phases of the RIS unit-cells on the target RIS.

Among them, the element values in the second beamforming matrix correspond to the RIS unit-cells on the target RIS one-by-one. The element values of the first beamforming matrix may include the adjusted phases of corresponding RIS unit-cells.

In this embodiment, in the first beamforming matrix, a phase of a RIS unit-cell corresponding to an individual element may be updated based on the phase change value to obtain the updated first beamforming matrix, that is, the second beamforming matrix, to achieve phase adjustment for the RIS unit-cells on the target RIS.

In the embodiment of the present disclosure, within distributed RISs, RISs are configured with corresponding time-domain adjustment coefficients, and different RISs corresponding to different time-domain adjustment coefficients. The implementation process of phase adjustment for RIS unit-cells on a target RIS through SMM is provided by taking the target RIS as an example. In this process, phase adjustment for the RIS unit-cells on the target RIS is achieved in the time domain based on a time-domain adjustment coefficient corresponding to the target RIS, thus achieving multi-modulation of phase in both time and space, thereby rendering Doppler frequency shift information of RIS channels where different RISs are located to be different. In this way, the phase adjustment effect of the RIS unit-cells on the RIS is improved.

In some embodiments, within the distributed RISs, RIS unit-cells of an RIS are distributed diagonally, and a beamforming matrix which is corresponding to the RIS and has undergone phase adjustment through SMM can be represented as:

$$\varphi_i^{SMM}(t) = \begin{bmatrix} e^{j(\varphi_{11}+\mu_i t)} & 0 & 0 \\ 0 & \ddots & 0 \\ 0 & 0 & e^{j(\varphi_{M_iM_i}+\mu_i t)} \end{bmatrix}$$

$$= e^{j\mu_i t} \begin{bmatrix} e^{j\varphi_{11}} & 0 & 0 \\ 0 & \ddots & 0 \\ 0 & 0 & e^{j\varphi_{M_iM_i}} \end{bmatrix} = e^{j\mu_i t}\varphi_i(t)$$

Among them, $\varphi_i^{SMM}(t)$ represents a beamforming matrix which is corresponding to the i-th RIS and has undergone phase adjustment through SMM (regarded as the second beamforming matrix in this embodiment), and the superscript SMM represents phase adjustment through SMM; $M_i$ represents the number of RIS unit-cells on the i-th RIS, $\varphi_{11}$ represents a phase of an RIS unit-cell located in the first row and first column of the i-th RIS, and $\varphi_{M_iM_i}$ represents a phase of an RIS unit-cell located in the $M_i$-th row and the $M_i$-th column of the i-th RIS; $\mu_i$ represents a time-domain adjustment coefficient corresponding to the i-th RIS, and t represents the current time. Furthermore, by inputting the beamforming matrix corresponding to the i-th RIS that has undergone phase adjustment through SMM into the transmission and reception signal model, the following can be obtained:

$$y^{SMM}(t) = \left[\sum_{i=1}^{S}(G_i\varphi_i^{SMM}H_i) + H_d\right]x(t) + n_0(t)$$

$$= \left[\sum_{i=1}^{S}(G_i\varphi_iH_i)e^{j\mu_it} + H_d\right]x(t) + n_0(t)$$

Among them, x(t) represents a transmitted signal at time t, $y^{SMM}$(t) represents a received signal reflected by the i-th RIS unit-cell at time t, the i-th RIS unit-cell has undergone adjustment through SMM, and $n_0$(t) represents random noise at time t.

Hereinafter, it is discussed that there is a difference in Doppler frequency shift information between a received signal y (t) without phase adjustment (i.e., a received signal reflected by an RIS without phase adjustment through SMM) and a received signal $y^{SMM}$(t) with phase adjustment (i.e., a received signal reflected by an RIS with phase adjustment through SMM).

Fourier transform on the received signal y (t) without phase adjustment yields:

$$y(f) = \int_{-\infty}^{+\infty} y(t) \cdot e^{-j2\pi ft}dt$$

$$= \int_{-\infty}^{+\infty}\left\{\left[\sum_{i=1}^{S}(G_i\varphi_iH_i) + H_d\right]x(t) + n_0(t)\right\} \cdot e^{-j2\pi ft}dt$$

$$= \sum_{i=1}^{S}\int_{-\infty}^{+\infty}(G_i\varphi_iH_i)x(t)e^{-j2\pi ft}dt + \int_{-\infty}^{+\infty}H_dx(t)e^{-j2\pi ft}dt$$

$$+ \int_{-\infty}^{+\infty}n_0(t)e^{-j2\pi ft}dt$$

Fourier transform on the received signal $y^{SMM}$(t) with phase adjustment yields:

$$y^{SMM}(f) = \int_{-\infty}^{+\infty} y^{SMM}(t) \cdot e^{-j2\pi ft}dt$$

$$= \int_{-\infty}^{+\infty}\left\{\left[\sum_{i=1}^{S}(G_i\varphi_iH_i)e^{j\mu_it} + H_d\right]x(t) + n_0(t)\right\} \cdot e^{-j2\pi ft}dt$$

$$= \sum_{i=1}^{S}\int_{-\infty}^{+\infty}(G_i\varphi_iH_i)x(t)e^{-j(2\pi f-\mu_i)t}dt + \int_{-\infty}^{+\infty}H_dx(t)e^{-j2\pi ft}dt$$

$$+ \int_{-\infty}^{+\infty}n_0(t)e^{-j2\pi ft}dt$$

Comparing y(f) and $y^{SMM}$(f), it can be seen that the channel, after phase adjustment for the RIS unit-cells through SMM, exhibits an additional frequency shift, which can be reflected in the Doppler domain as:

$$f_{shift} = -\frac{\mu_i}{2\pi}$$

Therefore, different time-domain adjustment coefficients are assigned for different RISs, for example, time-domain adjustment coefficients $\mu_1$-$\mu_i$ corresponding to the 1st to i-th RISs are different, so that the receiving end (including the network device) can distinguish the RIS channels where different RISs are located in the delay-Doppler domain.

In some embodiments, the time-domain adjustment coefficients corresponding to RISs may be pre-configured. For example, the time-domain adjustment coefficients for the distributed RISs are configured by a professional.

A movement of the terminal will also introduce Doppler frequency shift to an uplink channel. Different movement speeds of the terminal introduce different Doppler frequency shift information to the uplink channel. In a specific communication scenario, a movement speed of a user is constrained. For instance, in a highway scenario, a vehicle operates within a speed-restricted range. Consequently, the Doppler frequency shift information introduced by the terminal's movement also falls within a restricted range. Based on these premises, the following embodiments are proposed.

In some embodiments, in order to further improve the accuracy of distinguishing the RIS channels where different RIS are located in the delay-Doppler domain at the receiving end, within the distributed RISs, Doppler frequency shift ranges corresponding to the RIS channels where different RISs are located satisfy orthogonality. That is, the Doppler frequency shift ranges corresponding to the RIS channels where different RIS are located do not overlap. This ensures the orthogonality of a plurality of signals in the delay-Doppler domain, preventing the plurality of signals from overlapping with each other in the delay-Doppler domain and simplifying the signal processing complexity.

In this embodiment, the process of constructing the orthogonality for the Doppler frequency shift ranges corresponding to the RIS channels may include the following step 1 to step 3:

Step 1: acquiring a Doppler frequency shift boundary value, where the Doppler frequency shift boundary value is a boundary value of Doppler frequency shift information caused by a movement of the terminal to a communication channel;

Step 2: for the distributed RISs, determining a characteristic Doppler value corresponding to a respective RIS based on the Doppler frequency shift boundary value, where the Doppler frequency shift boundary value and the characteristic Doppler value corresponding to the respective RIS reflect a Doppler frequency shift range corresponding to the respective RIS, where within the distributed RISs, the RIS channels where different RISs are located correspond to different characteristic Doppler values, so that Doppler frequency shift ranges corresponding to different RISs do not overlap;

Step 3: for the distributed RISs, updating a time-domain adjustment coefficient corresponding to the respective RIS based on the characteristic Doppler value corresponding the respective RIS to obtain an updated time-domain adjustment coefficient corresponding to the respective RIS.

In step 1, the Doppler frequency shift boundary value may be determined based on an upper limit of a movement speed of the terminal, a carrier frequency, and a speed of light. Among them, the Doppler frequency shift boundary value may be a Doppler frequency shift boundary value of a direct uplink channel from the terminal to the network device.

For example, the formula for determining the Doppler frequency shift boundary value may be expressed as:

$$f_{d-upper} = \frac{v_{upper}}{c} f_c$$

Among them, $v_{upper}$ represents the upper limit of the movement speed of the terminal, $f_c$ represents the carrier frequency, c represents the speed of light, and $f_{d-upper}$ represents the Doppler frequency shift boundary value.

In step 2, in order to ensure that the Doppler frequency shift ranges corresponding to the RIS channels where the distributed RISs are located satisfy orthogonality, a corresponding characteristic Doppler value may be determined for an individual RIS within the distributed RISs based on the Doppler frequency shift boundary value. Within the distributed RISs, RIS channels where different RISs correspond to different characteristic Doppler values, and the Doppler frequency shift ranges corresponding to the RISs may be constructed based on the Doppler frequency shift boundary value and the characteristic Doppler values corresponding to the RISs. On the one hand, the construction on the basis of the Doppler frequency shift boundary value ensures the rationality of the characteristic Doppler value. On the other hand, different characteristic Doppler values are determined for different RISs, so that the RIS channels where different RISs are located correspond to different characteristic Doppler values.

In a possible implementation, the characteristic Doppler values corresponding to the RISs may be determined based on the Doppler frequency shift upper limit and the number of RISs allowed by a communication system. For example, a corresponding characteristic weight may be determined for a respective RIS based on the number of RISs allowed by the communication system, and different RISs correspond to different characteristic weights. The characteristic Doppler value corresponding to the respective RIS may be obtained by multiplying the characteristic weight with the Doppler frequency shift upper limit.

In a possible implementation, the characteristic Doppler values corresponding to the RISs are determined based on the Doppler frequency shift upper limit, the time-domain adjustment coefficients corresponding to the distributed RISs,

and the number of RISs allowed by the communication system. Thus, based on a combination of the time-domain adjustment coefficients corresponding to the distributed RISs and the number of RISs allowed by the communication system, the differentiation between the characteristic Doppler values corresponding to different RISs can be improved.

In a possible implementation, a formula for determining a characteristic Doppler value corresponding to an RIS is expressed as:

$$f_{SMM}(s) = (s+1)f_{MD}, s = +1, \pm 2, \dots, \pm S, -(S+1)$$

Among them, $f_{SMM}(s)$ is a characteristic Doppler value corresponding to the $|s|$-th RIS; S is the number of RISs allowed by the communication system; $f_{MD}$ may be the Doppler frequency shift upper limit, or it may be obtained by adjusting the Doppler frequency shift upper limit based on the time-domain adjustment coefficients corresponding to the distributed RISs. For example, for the first RIS, $f_{MD}$ corresponding to the first RIS may be obtained by multiplying a time-domain adjustment coefficient corresponding to the first RIS by the Doppler frequency shift upper limit. For the second RIS, $f_{MD}$ corresponding to the second RIS may be obtained by multiplying 2 by the time-domain adjustment coefficient corresponding to the first RIS and then multiplying the result by the Doppler frequency shift upper limit.

If $f_{MD}$ is the Doppler frequency shift upper limit, the characteristic Doppler values corresponding to the RISs are determined based on the Doppler frequency shift upper limit and the number of RISs allowed by the communication system; if $f_{MD}$ is obtained by adjusting the Doppler frequency shift upper limit based on the time-domain adjustment coefficients corresponding to the distributed RISs, the characteristic Doppler values corresponding to the RISs are determined based on the Doppler frequency shift upper limit, the time-domain adjustment coefficients corresponding to the distributed RISs, and the number of RISs allowed by the communication system.

In step 3, for the distributed RISs, the time-domain adjustment coefficient corresponding to the respective RIS is updated based on the characteristic Doppler value of the respective RIS, so as to obtain the updated time-domain adjustment coefficient corresponding to the respective RIS. During the process of adjusting the phases of the RIS unit-cells on the target RIS in the time domain based on the time-domain adjustment coefficient corresponding to the target RIS through SMM, the phases of the RIS unit-cells on the target RIS in the time domain may be adjusted based on the updated time-domain adjustment coefficient corresponding to the target RIS through SMM. In this way, during the process of determining the time-domain adjustment coefficients, the orthogonality of the Doppler frequency shift ranges was constructed, so for the RISs which have undergone phase adjustment based on their time-domain adjustment coefficients, the Doppler frequency shift ranges corresponding to their RIS channels can satisfy orthogonality, thereby making the RIS channels where different RISs are located more distinguishable.

In a possible implementation, a formula for updating a time-domain adjustment coefficient corresponding to an RIS based on the characteristic Doppler value of the RIS may be expressed as:

$$\mu_s = 2\pi \times f_{SMM}(s)$$

Among them, $\mu_s$ is an updated time-domain adjustment coefficient corresponding to the $|s|$-th RIS.

As an example, from the perspective of Doppler domain, an impulse response of the direct uplink channel from the terminal to the network device will fall within a range of $[-f_0, f_0]$, where $f_0$ is the Doppler frequency shift upper limit caused by factors such as a movement of the terminal, $f_0$ is regarded as $f_{d-upper}$ in the above embodiment; an impulse response of an RIS channel where the s-th RIS is located will fall within the range of $[f_s - f_0, f_s + f_0]$, where $f_s$ is regarded as $f_{SMM}(s)$ in the above embodiment. Therefore, different characteristic Doppler values $f_s$ may be configured for different RISs to ensure that in the Doppler domain, ranges within which impulse responses of the RIS channels where the RISs are located fall do not overlap with each other, thus ensuring the orthogonality of the Doppler frequency shift ranges of the RIS channels where different RIS are located. Finally, the time-domain adjustment coefficient corresponding to the respective RIS is updated using the characteristic Doppler value of the RIS based on a mapping between the time-domain adjustment coefficient corresponding to the respective RIS and the characteristic Doppler value of the respective RIS.

In some embodiments, the receiving of the first pilot signal transmitted by the terminal through the uplink channel by the network device may include: the network device receiving the first pilot signal during a random access procedure of the uplink channel; or the network device receiving the first pilot signal upon successful completion of random access on the uplink channel; or the network device receiving the first pilot signal upon optimization and adjustment of the target RIS. Therefore, during the random access procedure of the uplink channel, upon successful completion of random access of the uplink channel, or upon optimization and adjustment of the target RIS, the network device may determine the Doppler frequency shift information of the uplink channel based on the pilot signal transmitted by the terminal, and distinguish the RIS channels where different RIS are located.

In some embodiments, the transforming of the first pilot signal by the network device from the time-frequency domain to the delay-Doppler domain to obtain the second pilot signal may include: transforming the first pilot signal from the time-frequency domain to the delay-Doppler domain to obtain the second pilot signal by performing symplectic Fourier transform (Symplectic Finite Fourier Transform, SFFT) on the first pilot signal. Therefore, by utilizing SFFT, the accuracy of transforming the first pilot signal from the time-frequency domain to the delay-Doppler domain can be improved.

As an example, FIG. 4 is an example diagram of a signal represented in a delay-Doppler domain. In FIG. 4, (a) is a representation of a received signal (such as the first pilot signal) in the delay-Doppler domain without phase adjustment for the RIS unit-cells, (b) is a representation of a received signal (such as the first pilot signal) in the delay-Doppler domain with phase adjustment for the RIS unit-cells, and the horizontal axes of (a) and (b) represent a time delay dimension, and the vertical axes of (a) and (b) represent a Doppler dimension. Different filled grids correspond to different paths (i.e., channels). It can be seen that after phase adjustment for the RIS unit-cells, different paths have different positions in the Doppler dimension.

Regarding the pilot signals (such as, the first pilot signal and the second pilot signal) in the embodiments of the present disclosure, any type of pilot may be used, and a guard interval or an irregular pilot may be added to the pilot signal. The following provides a design pattern for the pilot signal with reference to embodiments. The design pattern can simplify the signal processing during the channel estimation process, make signal processing easier, reduce the huge computational load of matrix inversion and matrix multiplication in signal processing, and improve the efficiency and the accuracy of signal processing.

Design pattern for the pilot signals

In some embodiments, the first pilot signal is a signal receiving matrix in the time-frequency domain, and element values in the first pilot signal are all non-zero. The second pilot signal is a signal receiving matrix in the delay-Doppler domain, the second pilot signal is represented as a product of an energy normalization matrix and a reference matrix. A first element value of the reference matrix is non-zero, and remaining element values of the reference matrix except for the first element value are zero. Therefore, by transforming the first pilot signal from the time-frequency domain to the delay-Doppler domain, a second pilot signal with simpler data can be obtained. Based on the second pilot signal, the signal processing complexity of channel estimation is reduced, thereby improving the efficiency and the accuracy of channel estimation.

In this embodiment, when designing the pilot signals, the second pilot signal may be designed first, and then the second pilot signal can be transformed from the delay-Doppler domain to the time-frequency domain to obtain the first pilot signal, in this way, the design of the first pilot signal is completed. After the first pilot signal is designed, the terminal can send the designed first pilot signal.

In a possible implementation, the second pilot signal may be transformed from the delay-Doppler domain to the time-frequency domain by performing an inverse symplectic Fourier transform (Inverse Symplectic Finite Fourier Transform, ISFFT) on the second pilot signal, to obtain the first pilot signal.

In a possible implementation, the second pilot signal may be represented as:

$$s_r^{DD} = \sqrt{AB} \begin{bmatrix} 1 & \cdots & 0 \\ \vdots & \ddots & \vdots \\ 0 & \cdots & 0 \end{bmatrix}$$

Among them, AB represents an energy normalization matrix, and $s_r^{DD}$ represents the second pilot signal.

The first pilot signal obtained by performing ISFFT on the second pilot signal may be expressed as:

$$s_r^{FT} = \begin{bmatrix} 1 & \cdots & 1 \\ \vdots & \ddots & \vdots \\ 1 & \cdots & 1 \end{bmatrix}$$

In some embodiments, in the process of determining the channel information of the uplink channel based on the second pilot signal, the second pilot signal may be filtered, and then the channel information of the uplink channel may be determined based on the filtered second pilot signal. Therefore, by filtering the second pilot signal, noise (such as some invalid data) in the second pilot signal is removed, thereby improving the accuracy of the channel information of the uplink channel.

In a possible implementation, the second pilot signal may be filtered based on a configured threshold to remove noise data caused by factors such as, an RIS power (e.g., the RIS power being too low), to reduce the impact of the data on channel estimation.

In this implementation, the second pilot signal is a received signal matrix, and all elements smaller than the threshold in the second pilot signal may be set to zero to achieve filtering of the second pilot signal.

In some embodiments, in addition to the first pilot signal, the network device may also acquire location information of the network device, location information of the target RIS, elevation angle information of the target RIS, and the number of RIS unit-cells on the target RIS. During the process of channel estimation, the network device may perform channel estimation based on the location information of the network device, the location information of the target RIS, the elevation angle information of the target RIS, the number of RIS unit-cells on the target RIS, and the channel information obtained based on the second pilot signal. Channel estimation will not be described in detail here.

In some embodiments, in addition to the Doppler frequency shift information of the uplink channel, the channel information of the uplink channel may further include complex amplitude response and delay information of the uplink channel.

On the network device side, an embodiment of the present disclosure provides a channel estimation apparatus, which may be a network device. As shown in FIG. 5, the channel estimation apparatus may include a transceiver 501, a processor 502, and a memory 503.

The transceiver 501 is used to transmit and receive data under a control of the processor 502.

Among them, in FIG. 5, a bus architecture may include any number of interconnected buses and bridges. Specifically, various circuits of one or more processors represented by the processor 502 and a memory represented by the memory 503 are linked together. The bus architecture may also link various other circuits together, such as, a peripheral device, a voltage regulator and a power management circuit, which are well known in the art and will not be further described herein. The bus interface provides interfaces. The transceiver 501 may be a plurality of elements, including a transmitter and a receiver, providing a unit for communicating with various other devices via a transmission medium which includes a wireless channel, a wired channel, an optical cable or other transmission medium. The processor 502 is responsible for managing the bus architecture and general processing, and the memory 503 may store data used by the processor 502 when performing an operation.

The processor 502 may be a CPU, an ASIC, an FPGA, or a CPLD, and the processor may also adopt a multi-core architecture.

The processor 502 calls the computer program stored in the memory 503 to execute any of the methods related to the channel estimation apparatus provided in the embodiments of the present disclosure according to obtained executable instructions. The processor and the memory may also be physically separated in their layout.

Specifically, the processor 502 is configured to perform the following operations: receiving a first pilot signal transmitted by a terminal over an uplink channel, where RIS unit-cells of a target RIS in the uplink channel have undergone phase adjustment; transforming the first pilot signal from a time-frequency domain to a delay-Doppler domain to obtain a second pilot signal; determining channel information of the uplink channel based on the second pilot signal, where the channel information includes Doppler frequency shift information of the uplink channel; and performing channel estimation based on the channel information, to obtain a channel estimation result of the uplink channel.

In a possible implementation, a process of phase adjustment for the RIS unit-cells on the target RIS includes: adjusting phases of the RIS unit-cells on the target RIS through SMM.

In a possible implementation, within the distributed RISs, the RISs are configured with corresponding time-domain adjustment coefficients, and different RISs correspond to different time-domain adjustment coefficients. The adjusting, through SMM, the phases of the RIS unit-cells on the target RIS includes: adjusting, through SMM, the phases of the RIS unit-cells on the target RIS in a time domain based on a time-domain adjustment coefficient corresponding to the target RIS.

In a possible implementation, the adjusting, through SMM, the phases of the RIS unit-cells on the target RIS in the time domain based on the time-domain adjustment coefficient corresponding to the target RIS includes: acquiring a first beamforming matrix of the target RIS, where the first beamforming matrix is a beamforming matrix of the RIS unit-cells on the target RIS before SMM; determining a phase change value in the time domain based on the time-domain adjustment coefficient corresponding to the target RIS; and updating the phases of the RIS unit-cells in the first beamforming matrix based on the phase change value to obtain a second beamforming matrix, where element values of the second beamforming matrix are related to adjusted phases of the RIS unit-cells on the target RIS.

In a possible implementation, the determining the phase change value in the time domain based on the time-domain adjustment coefficient corresponding to the target RIS includes: determining a product of the time-domain adjustment coefficient corresponding to the target RIS and a current time as the phase change value.

In a possible implementation, within the distributed RISs, Doppler frequency shift ranges corresponding to the RIS channels where different RISs are located satisfy orthogonality, and a process of constructing the orthogonality includes: acquiring a Doppler frequency shift boundary value, where the Doppler frequency shift boundary value is a boundary value of Doppler frequency shift information caused by a movement of the terminal to a communication channel; for the distributed RISs, determining a characteristic Doppler value corresponding to a respective RIS based on the Doppler frequency shift boundary value, where the Doppler frequency shift boundary value and the characteristic Doppler value corresponding to the respective RIS reflect a Doppler frequency shift range corresponding to the respective RIS.

Within the distributed RISs, the RIS channels where different RISs are located correspond to different characteristic Doppler values, so that Doppler frequency shift ranges corresponding to different RISs do not overlap. For the distributed RISs, updating a time-domain adjustment coefficient corresponding to the respective RIS based on the characteristic Doppler value corresponding the respective RIS to obtain an updated time-domain adjustment coefficient corresponding to the respective RIS. The adjusting, through SMM, the phases of the RIS unit-cells on the target RIS in the time domain based on the time-domain adjustment coefficient corresponding to the target RIS includes: adjusting, through SMM, the phases of the RIS unit-cells on the target RIS in the time domain based on an updated time-domain adjustment coefficient corresponding to the target RIS.

In a possible implementation, for the distributed RISs, the determining the characteristic Doppler value corresponding to the respective RIS based on the Doppler frequency shift boundary value includes: determining the characteristic Doppler value corresponding to the respective RIS based on a Doppler frequency shift upper limit, time-domain adjustment coefficients corresponding to the distributed RISs, and a number of RISs allowed by a communication system.

In a possible implementation, during a process of receiving the first pilot signal transmitted by the terminal over the uplink channel, the processor 502 is configured to perform following operations: receiving the first pilot signal during a random access procedure of the uplink channel; or receiving the first pilot signal upon successful completion of random access on the uplink channel; or receiving the first pilot signal upon optimization and adjustment of the target RIS.

In a possible implementation, during a process of transforming the first pilot signal from the time-frequency domain to the delay-Doppler domain to obtain the second pilot signal, the processor 502 is configured to perform following operations: transforming the first pilot signal from the time-frequency domain to the delay-Doppler domain by performing SFFT on the first pilot signal, to obtain the second pilot signal.

In a possible implementation, the first pilot signal is a signal receiving matrix in the time-frequency domain, and element values in the first pilot signal are all non-zero. The second pilot signal is a signal receiving matrix in the delay-Doppler domain, the second pilot signal is represented as a product of an energy normalization matrix and a reference matrix, where a first element value of the reference matrix is non-zero, and remaining element values of the reference matrix except for the first element value are zero.

In a possible implementation, during a process of determining the channel information of the uplink channel based on the second pilot signal, the processor 502 is configured to perform following operations: filtering the second pilot signal and determining the channel information based on the filtered second pilot signal.

In a possible implementation, during a process of filtering the second pilot signal, the processor 502 is configured to perform following operations: filtering the second pilot signal according to a configured threshold.

It should be noted that the above-mentioned apparatus provided in the present disclosure may carry out all the method steps implemented by the network device in the above-mentioned method embodiments, and may achieve the same technical effects. Therefore, specific descriptions of parts and beneficial effects similar as the method embodiments in this embodiment will not be repeated here.

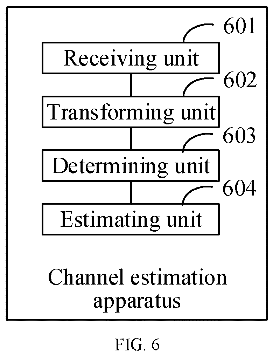

On the network device side, an embodiment of the present disclosure further provides a channel estimation apparatus, which may be a network device. As shown in FIG. 6, the channel estimation apparatus includes a receiving unit 601, a transforming unit 602, a determining unit 603, and an estimating unit 604.

The receiving unit 601 is configured to receive a first pilot signal transmitted by a terminal over an uplink channel, where RIS unit-cells of a target RIS in the uplink channel have undergone phase adjustment.

The transforming unit 602 is configured to transform the first pilot signal from a time-frequency domain to a delay-Doppler domain to obtain a second pilot signal.

The determining unit 603 is configured to determine channel information of the uplink channel based on the second pilot signal, where the channel information includes Doppler frequency shift information of the uplink channel.

The estimating unit 604 is configured to perform channel estimation based on the channel information, to obtain a channel estimation result of the uplink channel.

In a possible implementation, a process of phase adjustment for the RIS unit-cells on the target RIS includes: adjusting phases of the RIS unit-cells on the target RIS through spatial multi-modulation SMM.

In a possible implementation, within the distributed RISs, the RISs are configured with corresponding time-domain adjustment coefficients, and different RISs correspond to different time-domain adjustment coefficients. The adjusting, through SMM, the phases of the RIS unit-cells on the target RIS includes: adjusting, through SMM, the phases of the RIS unit-cells on the target RIS in a time domain based on a time-domain adjustment coefficient corresponding to the target RIS.

In a possible implementation, the adjusting, through SMM, the phases of the RIS unit-cells on the target RIS in the time domain based on the time-domain adjustment coefficient corresponding to the target RIS includes: acquiring a first beamforming matrix of the target RIS, where the first beamforming matrix is a beamforming matrix of the RIS unit-cells on the target RIS before SMM; determining a phase change value in the time domain based on the time-domain adjustment coefficient corresponding to the target RIS; and updating the phases of the RIS unit-cells in the first beamforming matrix based on the phase change value to obtain a second beamforming matrix, where element values of the second beamforming matrix are related to adjusted phases of the RIS unit-cells on the target RIS.

In a possible implementation, the determining the phase change value in the time domain based on the time-domain adjustment coefficient corresponding to the target RIS includes: determining a product of the time-domain adjustment coefficient corresponding to the target RIS and a current time as the phase change value.

In a possible implementation, within the distributed RISs, Doppler frequency shift ranges corresponding to the RIS channels where different RISs are located satisfy orthogonality, and a process of constructing the orthogonality includes: acquiring a Doppler frequency shift boundary value, where the Doppler frequency shift boundary value is a boundary value of Doppler frequency shift information caused by a movement of the terminal to a communication channel; for the distributed RISs, determining a characteristic Doppler value corresponding to a respective RIS based on the Doppler frequency shift boundary value, where the Doppler frequency shift boundary value and the characteristic Doppler value corresponding to the respective RIS reflect a Doppler frequency shift range corresponding to the respective RIS. Within the distributed RISs, the RIS channels where different RISs are located correspond to different characteristic Doppler values, so that Doppler frequency shift ranges corresponding to different RISs do not overlap. For the distributed RISs, updating a time-domain adjustment coefficient corresponding to the respective RIS based on the characteristic Doppler value corresponding the respective RIS to obtain an updated time-domain adjustment coefficient corresponding to the respective RIS. The adjusting, through SMM, the phases of the RIS unit-cells on the target RIS in the time domain based on the time-domain adjustment coefficient corresponding to the target RIS includes: adjusting, through SMM, the phases of the RIS unit-cells on the target RIS in the time domain based on an updated time-domain adjustment coefficient corresponding to the target RIS.

In a possible implementation, for the distributed RISs, the determining the characteristic Doppler value corresponding to the respective RIS based on the Doppler frequency shift boundary value includes: determining the characteristic Doppler value corresponding to the respective RIS based on a Doppler frequency shift upper limit, time-domain adjustment coefficients corresponding to the distributed RISs, and a number of RISs allowed by a communication system.

In a possible implementation, the receiving unit 601 is specifically configured to: receive the first pilot signal during a random access procedure of the uplink channel; or receive the first pilot signal upon successful completion of random access on the uplink channel; or receive the first pilot signal upon optimization and adjustment of the target RIS.

In a possible implementation, the transforming unit 602 is specifically configured to: transform the first pilot signal from the time-frequency domain to the delay-Doppler domain by performing SFFT on the first pilot signal, to obtain the second pilot signal.

In a possible implementation, the first pilot signal is a signal receiving matrix in the time-frequency domain, and element values in the first pilot signal are all non-zero. The second pilot signal is a signal receiving matrix in the delay-Doppler domain, the second pilot signal is represented as a product of an energy normalization matrix and a reference matrix, where a first element value of the reference matrix is non-zero, and remaining element values of the reference matrix except for the first element value are zero.

In a possible implementation, the determining unit 603 is specifically configured to: filter the second pilot signal; and determine the channel information based on the filtered second pilot signal.

In a possible implementation, during a process of filtering the second pilot signal, the determining unit 603 is specifically configured to filter the second pilot signal according to a configured threshold.

It should be noted that the above-mentioned apparatus provided in the present disclosure may carry out all the method steps implemented by the network device in the above-mentioned method embodiments, and may achieve the same technical effects. Therefore, specific descriptions of parts and beneficial effects similar as the method embodiments in this embodiment will not be repeated here.

It should be noted that the division of units in the above embodiments of the present disclosure is illustrative, and it is only a logical function division, there may be other division manners in actual implementations. In addition, each functional unit in each embodiment of the present disclosure may be integrated in one processing unit, or may exist physically alone, or two or more units may be integrated in one unit. The above integrated unit may be implemented in a form of hardware or a software functional unit.

If the integrated unit is implemented in the form of a software functional unit and sold or used as an independent product, it may be stored in a processor-readable storage medium. Based on this understanding, in the technical solution of the present disclosure, the essence or the part that contributes to the prior art or all or part of the technical solution may be embodied in the form of a software product, and the computer software product is stored in a storage medium and includes several instructions to cause a computer device (which may be a personal computer, a server, or a network device, etc.) or a processor (processor) to perform all or a part of the steps of the methods described in the embodiments of the present disclosure. The aforementioned storage medium includes various media that can store program codes such as a USB flash disk, a mobile hard disk, a read-only memory (Read-only Memory, ROM), a random access memory (Random Access Memory, RAM), a magnetic disk or an optical disk.

On the network device side, an embodiment of the present disclosure further provides a processor-readable storage medium, which stores a computer program for enabling a processor to execute any of the methods related to channel estimation provided in the embodiments of the present disclosure. The processor is enabled to implement the method steps in the above-mentioned channel estimation method embodiments and may achieve the same technical effects. Therefore, specific descriptions of parts and beneficial effects similar as the method embodiments in this embodiment will not be repeated here.

The processor-readable storage medium may be any available medium or data storage device that a processor can access, including but not limited to a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state drive (SSD), etc.).

Those skilled in the art should understand that the embodiments of the present disclosure may be provided as a method, a system, or a computer program product. Therefore, the present disclosure may take the form of a complete hardware embodiment, a complete software embodiment, or an embodiment combining software and hardware aspects. Moreover, the present disclosure may take the form of a computer program product implemented on one or more computer-usable storage media (including but not limited to a magnetic disk memory and an optical memory, etc.) including computer usable program codes.

The present disclosure is described with reference to the flowcharts and/or the block diagrams of the methods, the apparatus, and the computer program product according to the embodiments of the present disclosure. It should be understood that each flow and/or block in the flowcharts and/or block diagrams and the combination of a flow and/or a block in the flowcharts and/or the block diagrams can be implemented by computer-executable instructions. These computer-executable instructions can be provided to a general-purpose computer, a special-purpose computer, an embedded processor or a processor of other programmable data processing device to generate a machine, so that the instructions executed by the computer or the processor of other programmable data processing device produce an apparatus for implementing the functions specified in one or more flows of the flowcharts and/or one or more blocks of the block diagrams.

These processor-executable instructions may also be stored in the processor-readable memory that can guide the computer or other programmable data processing device to work in a specific way, so that the instructions stored in the processor-readable memory produce a manufactured product including an instruction apparatus, and the instruction apparatus implements the functions specified in one or more flows of the flowcharts and/or one or more blocks of the block diagrams.

These processor-executable instructions may also be loaded on a computer or other programmable data processing device, so that a series of operation steps are performed on the computer or other programmable device to produce a computer-implemented process, so that the instructions executed on the computer or other programmable device provide steps for implementing the functions specified in one or more flows of the flowcharts and/or one or more blocks of the block diagrams.

Apparently, the persons skilled in the art can make various modifications and variations to the present disclosure without departing from the spirit and scope of the present disclosure. Thus, if these modifications and variations of the present disclosure are within the scope of the claims of the present disclosure and the equivalent technologies thereof, the present disclosure is intended to include these modifications and variations.

**Claims**

1. A channel estimation method, **characterized in that**, within distributed reconfigurable intelligent surfaces RISs, after phase adjustment for RIS unit-cells on the RISs, RIS channels where different RISs are located correspond to different Doppler frequency shift information; on a network device side, the channel estimation method comprises:

   receiving a first pilot signal transmitted by a terminal over an uplink channel, wherein RIS unit-cells of a target RIS in the uplink channel have undergone phase adjustment;
   transforming the first pilot signal from a time-frequency domain to a delay-Doppler domain to obtain a second pilot signal;
   determining channel information of the uplink channel based on the second pilot signal, wherein the channel information comprises Doppler frequency shift information of the uplink channel;
   performing channel estimation based on the channel information, to obtain a channel estimation result of the uplink channel.

2. The channel estimation method according to claim 1, wherein a process of phase adjustment for the RIS unit-cells on the target RIS comprises:

adjusting phases of the RIS unit-cells on the target RIS through spatial multi-modulation SMM.

3. The channel estimation method according to claim 2, wherein within the distributed RISs, the RISs are configured with corresponding time-domain adjustment coefficients, and different RISs correspond to different time-domain adjustment coefficients; wherein the adjusting the phases of the RIS unit-cells on the target RIS through SMM comprises: adjusting, through SMM, the phases of the RIS unit-cells on the target RIS in a time domain based on a time-domain adjustment coefficient corresponding to the target RIS.

4. The channel estimation method according to claim 3, wherein the adjusting, through SMM, the phases of the RIS unit-cells on the target RIS in the time domain based on the time-domain adjustment coefficient corresponding to the target RIS comprises:

acquiring a first beamforming matrix of the target RIS, wherein the first beamforming matrix is a beamforming matrix of the RIS unit-cells on the target RIS before SMM;
determining a phase change value in the time domain based on the time-domain adjustment coefficient corresponding to the target RIS;
updating the phases of the RIS unit-cells in the first beamforming matrix based on the phase change value to obtain a second beamforming matrix, wherein element values of the second beamforming matrix are related to adjusted phases of the RIS unit-cells on the target RIS.

5. The channel estimation method according to claim 4, wherein the determining the phase change value in the time domain based on the time-domain adjustment coefficient corresponding to the target RIS comprises: determining a product of the time-domain adjustment coefficient corresponding to the target RIS and a current time as the phase change value.

6. The channel estimation method according to claim 3, wherein within the distributed RISs, Doppler frequency shift ranges corresponding to the RIS channels where different RISs are located satisfy orthogonality, and a process of constructing the orthogonality comprises:

acquiring a Doppler frequency shift boundary value, wherein the Doppler frequency shift boundary value is a boundary value of Doppler frequency shift information caused by a movement of the terminal to a communication channel;
for the distributed RISs, determining a characteristic Doppler value corresponding to a respective RIS based on the Doppler frequency shift boundary value, wherein the Doppler frequency shift boundary value and the characteristic Doppler value corresponding to the respective RIS reflect a Doppler frequency shift range corresponding to the respective RIS, wherein within the distributed RISs, the RIS channels where different RISs are located correspond to different characteristic Doppler values, to prevent Doppler frequency shift ranges corresponding to different RISs from overlapping;
for the distributed RISs, updating a time-domain adjustment coefficient corresponding to the respective RIS based on the characteristic Doppler value corresponding the respective RIS to obtain an updated time-domain adjustment coefficient corresponding to the respective RIS;
wherein the adjusting, through SMM, the phases of the RIS unit-cells on the target RIS in the time domain based on the time-domain adjustment coefficient corresponding to the target RIS comprises:
adjusting, through SMM, the phases of the RIS unit-cells on the target RIS in the time domain based on an updated time-domain adjustment coefficient corresponding to the target RIS.

7. The channel estimation method according to claim 6, wherein for the distributed RISs, the determining the characteristic Doppler value corresponding to the respective RIS based on the Doppler frequency shift boundary value comprises: determining the characteristic Doppler value corresponding to the respective RIS based on a Doppler frequency shift upper limit, time-domain adjustment coefficients corresponding to the distributed RISs, and a number of RISs allowed by a communication system.

8. The channel estimation method according to any one of claims 1 to 7, wherein the receiving the first pilot signal transmitted by the terminal over the uplink channel comprises:

receiving the first pilot signal during a random access procedure of the uplink channel; or,
receiving the first pilot signal upon successful completion of random access on the uplink channel; or,

receiving the first pilot signal upon optimization and adjustment of the target RIS.

9. The channel estimation method according to any one of claims 1 to 7, wherein the transforming the first pilot signal from the time-frequency domain to the delay-Doppler domain to obtain the second pilot signal comprises:
transforming the first pilot signal from the time-frequency domain to the delay-Doppler domain by performing symplectic Fourier transform SFFT on the first pilot signal, to obtain the second pilot signal.

10. The channel estimation method according to claim 9, wherein the first pilot signal is a signal receiving matrix in the time-frequency domain, and element values in the first pilot signal are all non-zero;
wherein the second pilot signal is a signal receiving matrix in the delay-Doppler domain, the second pilot signal is represented as a product of an energy normalization matrix and a reference matrix, wherein a first element value of the reference matrix is non-zero, and remaining element values of the reference matrix except for the first element value are zero.

11. The channel estimation method according to any one of claims 1 to 7, wherein the determining the channel information of the uplink channel based on the second pilot signal comprises:

    filtering the second pilot signal;
    determining the channel information based on a filtered second pilot signal.

12. The channel estimation method according to claim 11, wherein the filtering the second pilot signal comprises:
filtering the second pilot signal according to a configured threshold.

13. A channel estimation apparatus, **characterized in that**, within distributed RISs, after phase adjustment for RIS unit-cells on the RISs, RIS channels where different RISs are located correspond to different Doppler frequency shift information; on a network device side, the channel estimation apparatus comprises a memory, a transceiver, and a processor; wherein

    the memory is configured to store a computer program;
    the transceiver is configured to transmit and receive data under a control of the processor;
    the processor is configured to read the computer program from the memory and perform following operations:

        receiving a first pilot signal transmitted by a terminal over an uplink channel, wherein RIS unit-cells of a target RIS in the uplink channel have undergone phase adjustment;
        transforming the first pilot signal from a time-frequency domain to a delay-Doppler domain to obtain a second pilot signal;
        determining channel information of the uplink channel based on the second pilot signal, wherein the channel information comprises Doppler frequency shift information of the uplink channel;
        performing channel estimation based on the channel information, to obtain a channel estimation result of the uplink channel.

14. The channel estimation apparatus according to claim 13, wherein a process of phase adjustment for the RIS unit-cells on the target RIS comprises:
adjusting phases of the RIS unit-cells on the target RIS through SMM.

15. The channel estimation apparatus according to claim 14, wherein within the distributed RISs, the RISs are configured with corresponding time-domain adjustment coefficients, and different RISs correspond to different time-domain adjustment coefficients; wherein the adjusting the phases of the RIS unit-cells on the target RIS through SMM comprises:
adjusting, through SMM, the phases of the RIS unit-cells on the target RIS in a time domain based on a time-domain adjustment coefficient corresponding to the target RIS.

16. The channel estimation apparatus according to claim 15, wherein the adjusting, through SMM, the phases of the RIS unit-cells on the target RIS in the time domain based on the time-domain adjustment coefficient corresponding to the target RIS comprises:

    acquiring a first beamforming matrix of the target RIS, wherein the first beamforming matrix is a beamforming matrix of the RIS unit-cells on the target RIS before SMM;

determining a phase change value in the time domain based on the time-domain adjustment coefficient corresponding to the target RIS;

updating the phases of the RIS unit-cells in the first beamforming matrix based on the phase change value to obtain a second beamforming matrix, wherein element values of the second beamforming matrix are related to adjusted phases of the RIS unit-cells on the target RIS.

17. The channel estimation apparatus according to claim 16, wherein the determining the phase change value in the time domain based on the time-domain adjustment coefficient corresponding to the target RIS comprises:

determining a product of the time-domain adjustment coefficient corresponding to the target RIS and a current time as the phase change value.

18. The channel estimation apparatus according to claim 15, wherein within the distributed RISs, Doppler frequency shift ranges corresponding to the RIS channels where different RISs are located satisfy orthogonality, and a process of constructing the orthogonality comprises:

acquiring a Doppler frequency shift boundary value, wherein the Doppler frequency shift boundary value is a boundary value of Doppler frequency shift information caused by a movement of the terminal to a communication channel;

for the distributed RISs, determining a characteristic Doppler value corresponding to a respective RIS based on the Doppler frequency shift boundary value, wherein the Doppler frequency shift boundary value and the characteristic Doppler value corresponding to the respective RIS reflect a Doppler frequency shift range corresponding to the respective RIS, wherein within the distributed RISs, the RIS channels where different RISs are located correspond to different characteristic Doppler values, to prevent Doppler frequency shift ranges corresponding to different RISs from overlapping;

for the distributed RISs, updating a time-domain adjustment coefficient corresponding to the respective RIS based on the characteristic Doppler value corresponding the respective RIS to obtain an updated time-domain adjustment coefficient corresponding to the respective RIS;

wherein the adjusting, through SMM, the phases of the RIS unit-cells on the target RIS in the time domain based on the time-domain adjustment coefficient corresponding to the target RIS comprises:

adjusting, through SMM, the phases of the RIS unit-cells on the target RIS in the time domain based on an updated time-domain adjustment coefficient corresponding to the target RIS.

19. The channel estimation apparatus according to claim 18, wherein for the distributed RISs, the determining the characteristic Doppler value corresponding to the respective RIS based on the Doppler frequency shift boundary value comprises:

determining the characteristic Doppler value corresponding to the respective RIS based on a Doppler frequency shift upper limit, time-domain adjustment coefficients corresponding to the distributed RISs, and a number of RISs allowed by a communication system.

20. The channel estimation apparatus according to any one of claims 13 to 19, wherein during a process of receiving the first pilot signal transmitted by the terminal over the uplink channel, the processor is configured to perform following operations:

receiving the first pilot signal during a random access procedure of the uplink channel; or,

receiving the first pilot signal upon successful completion of random access on the uplink channel; or,

receiving the first pilot signal upon optimization and adjustment of the target RIS.

21. The channel estimation apparatus according to any one of claims 13 to 19, wherein during a process of transforming the first pilot signal from the time-frequency domain to the delay-Doppler domain to obtain the second pilot signal, the processor is configured to perform following operations:

transforming the first pilot signal from the time-frequency domain to the delay-Doppler domain by performing SFFT on the first pilot signal, to obtain the second pilot signal.

22. The channel estimation apparatus according to claim 21, wherein the first pilot signal is a signal receiving matrix in the time-frequency domain, and element values in the first pilot signal are all non-zero;

wherein the second pilot signal is a signal receiving matrix in the delay-Doppler domain, the second pilot signal is represented as a product of an energy normalization matrix and a reference matrix, wherein a first element value of the reference matrix is non-zero, and remaining element values of the reference matrix except for the first element value are zero.

23. The channel estimation apparatus according to any one of claims 13 to 19, wherein during a process of determining the channel information of the uplink channel based on the second pilot signal, the processor is configured to perform following operations:

   filtering the second pilot signal;
   determining the channel information based on a filtered second pilot signal.

24. The channel estimation apparatus according to claim 23, wherein during a process of filtering the second pilot signal, the processor is configured to perform following operations:
   filtering the second pilot signal according to a configured threshold.

25. A channel estimation apparatus, **characterized in that**, within distributed RISs, after phase adjustment for RIS unit-cells on the RISs, RIS channels where different RISs are located correspond to different Doppler frequency shift information; on a network device side, the channel estimation apparatus comprises:

   a receiving unit, configured to receive a first pilot signal transmitted by a terminal over an uplink channel, wherein RIS unit-cells of a target RIS in the uplink channel have undergone phase adjustment;
   a transforming unit, configured to transform the first pilot signal from a time-frequency domain to a delay-Doppler domain to obtain a second pilot signal;
   a determining unit, configured to determine channel information of the uplink channel based on the second pilot signal, wherein the channel information comprises Doppler frequency shift information of the uplink channel;
   an estimating unit, configured to perform channel estimation based on the channel information, to obtain a channel estimation result of the uplink channel.

26. The channel estimation apparatus according to claim 25, wherein a process of phase adjustment for the RIS unit-cells on the target RIS comprises:
   adjusting phases of the RIS unit-cells on the target RIS through spatial multi-modulation SMM.

27. The channel estimation apparatus according to claim 26, wherein within the distributed RISs, the RISs are configured with corresponding time-domain adjustment coefficients, and different RISs correspond to different time-domain adjustment coefficients; wherein the adjusting the phases of the RIS unit-cells on the target RIS through SMM comprises:
   adjusting, through SMM, the phases of the RIS unit-cells on the target RIS in a time domain based on a time-domain adjustment coefficient corresponding to the target RIS.

28. The channel estimation apparatus according to claim 27, wherein the adjusting, through SMM, the phases of the RIS unit-cells on the target RIS in the time domain based on the time-domain adjustment coefficient corresponding to the target RIS comprises:

   acquiring a first beamforming matrix of the target RIS, wherein the first beamforming matrix is a beamforming matrix of the RIS unit-cells on the target RIS before SMM;
   determining a phase change value in the time domain based on the time-domain adjustment coefficient corresponding to the target RIS;
   updating the phases of the RIS unit-cells in the first beamforming matrix based on the phase change value to obtain a second beamforming matrix, wherein element values of the second beamforming matrix are related to adjusted phases of the RIS unit-cells on the target RIS.

29. The channel estimation apparatus according to claim 28, wherein the determining the phase change value in the time domain based on the time-domain adjustment coefficient corresponding to the target RIS comprises:
   determining a product of the time-domain adjustment coefficient corresponding to the target RIS and a current time as the phase change value.

30. The channel estimation apparatus according to claim 27, wherein within the distributed RISs, Doppler frequency shift ranges corresponding to the RIS channels where different RISs are located satisfy orthogonality, and a process of constructing the orthogonality comprises:

acquiring a Doppler frequency shift boundary value, wherein the Doppler frequency shift boundary value is a boundary value of Doppler frequency shift information caused by a movement of the terminal to a communication channel;

for the distributed RISs, determining a characteristic Doppler value corresponding to a respective RIS based on the Doppler frequency shift boundary value, wherein the Doppler frequency shift boundary value and the characteristic Doppler value corresponding to the respective RIS reflect a Doppler frequency shift range corresponding to the respective RIS, wherein within the distributed RISs, the RIS channels where different RISs are located correspond to different characteristic Doppler values, to prevent Doppler frequency shift ranges corresponding to different RISs from overlapping;

for the distributed RISs, updating a time-domain adjustment coefficient corresponding to the respective RIS based on the characteristic Doppler value corresponding the respective RIS to obtain an updated time-domain adjustment coefficient corresponding to the respective RIS;

wherein the adjusting, through SMM, the phases of the RIS unit-cells on the target RIS in the time domain based on the time-domain adjustment coefficient corresponding to the target RIS comprises:

adjusting, through SMM, the phases of the RIS unit-cells on the target RIS in the time domain based on an updated time-domain adjustment coefficient corresponding to the target RIS.

31. The channel estimation apparatus according to claim 30, wherein for the distributed RISs, the determining the characteristic Doppler value corresponding to the respective RIS based on the Doppler frequency shift boundary value comprises:

determining the characteristic Doppler value corresponding to the respective RIS based on a Doppler frequency shift upper limit, time-domain adjustment coefficients corresponding to the distributed RISs, and a number of RISs allowed by a communication system.

32. The channel estimation apparatus according to any one of claims 25 to 31, wherein the receiving unit is specifically configured to:

receive the first pilot signal during a random access procedure of the uplink channel; or,
receive the first pilot signal upon successful completion of random access on the uplink channel; or,
receive the first pilot signal upon optimization and adjustment of the target RIS.

33. The channel estimation apparatus according to any one of claims 25 to 31, wherein the transforming unit is specifically configured to:

transform the first pilot signal from the time-frequency domain to the delay-Doppler domain by performing symplectic Fourier transform SFFT on the first pilot signal, to obtain the second pilot signal.

34. The channel estimation apparatus according to claim 33, wherein the first pilot signal is a signal receiving matrix in the time-frequency domain, and element values in the first pilot signal are all non-zero;

wherein the second pilot signal is a signal receiving matrix in the delay-Doppler domain, the second pilot signal is represented as a product of an energy normalization matrix and a reference matrix, wherein a first element value of the reference matrix is non-zero, and remaining element values of the reference matrix except for the first element value are zero.

35. The channel estimation apparatus according to any one of claims 25 to 31, wherein the determining unit is specifically configured to:

filter the second pilot signal;
determine the channel information based on a filtered second pilot signal.

36. The channel estimation apparatus according to claim 35, wherein the determining unit is specifically configured to:
filter the second pilot signal according to a configured threshold.

37. A processor-readable storage medium, **characterized in that**, the processor-readable storage medium stores a computer program for enabling the processor to execute the channel estimation method according to any one of claims 1 to 12.

FIG. 1

S201 First pilot signal

S202 Transforming the first pilot signal from a time-frequency domain to a delay-Doppler domain to obtain a second pilot signal

S203 Determining channel information of an uplink channel based on the second pilot signal, where the channel information includes Doppler frequency shift information of the uplink channel

S204 Performing channel estimation based on the channel information of the uplink channel, to obtain a channel estimation result of the uplink channel

FIG. 2

| Acquiring a first beamforming matrix of a target RIS, where the first beamforming matrix is a beamforming matrix of RIS unit-cells on the target RIS before SMM | S301 |

| Determining a phase change value in a time domain based on a time-domain adjustment coefficient corresponding to the target RIS | S302 |

| Updating the phases of the RIS unit-cells in the first beamforming matrix based on the phase change value to obtain a second beamforming matrix, where element values of the second beamforming matrix are related to adjusted phases of the RIS unit-cells on the target RIS | S303 |

FIG. 3

Phase adjustment

(a)                                    (b)

FIG. 4

Processor — 502
Memory — 503
Bus interface
Transceiver — 501

FIG. 5

Receiving unit — 601

Transforming unit — 602

Determining unit — 603

Estimating unit — 604

Channel estimation apparatus

FIG. 6

## INTERNATIONAL SEARCH REPORT

| International application No. |
| --- |
| **PCT/CN2023/142532** |

**A.   CLASSIFICATION OF SUBJECT MATTER**

H04L 25/02(2006.01)i

According to International Patent Classification (IPC) or to both national classification and IPC

**B.   FIELDS SEARCHED**

Minimum documentation searched (classification system followed by classification symbols)

IPC: H04L H04W H04B

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP: 智能反射面, 智能超表面, 单元, 相位, 调控, 调整, 多普勒, 频移, 信道估计, 导频, 时域, 频域, RIS, unit, phase, adjust, doppler, frequency shift, channel estimate, pilot, time domain, frequency domain

**C.   DOCUMENTS CONSIDERED TO BE RELEVANT**

| Category* | Citation of document, with indication, where appropriate, of the relevant passages | Relevant to claim No. |
| --- | --- | --- |
| A | CN 113472705 A (FUDAN UNIVERSITY) 01 October 2021 (2021-10-01) description, paragraphs [0005]-[0153] | 1-37 |
| A | CN 111817768 A (BEIJING JIAOTONG UNIVERSITY) 23 October 2020 (2020-10-23) entire document | 1-37 |
| A | CN 114844748 A (TSINGHUA UNIVERSITY) 02 August 2022 (2022-08-02) entire document | 1-37 |
| A | CN 114866377 A (XI'AN JIAOTONG UNIVERSITY) 05 August 2022 (2022-08-05) entire document | 1-37 |
| A | CN 115499276 A (PLA AEROSPACE ENGINEERING UNIVERSITY) 20 December 2022 (2022-12-20) entire document | 1-37 |
| A | WO 2022049112 A1 (VESTEL ELEKTRONIK SANAYI VE TICARET A. S.) 10 March 2022 (2022-03-10) entire document | 1-37 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 March 2024** | **28 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/142532** |

| Patent document cited in search report | | | Publication date (day/month/year) | Patent family member(s) | | | Publication date (day/month/year) |
|---|---|---|---|---|---|---|---|
| CN | 113472705 | A | 01 October 2021 | None | | | |
| CN | 111817768 | A | 23 October 2020 | None | | | |
| CN | 114844748 | A | 02 August 2022 | None | | | |
| CN | 114866377 | A | 05 August 2022 | None | | | |
| CN | 115499276 | A | 20 December 2022 | None | | | |
| WO | 2022049112 | A1 | 10 March 2022 | EP | 3962006 | A1 | 02 March 2022 |
| | | | | JP | 2023538822 | A | 12 September 2023 |
| | | | | US | 2023421412 | A1 | 28 December 2023 |
| | | | | KR | 20230058512 | A | 03 May 2023 |

Form PCT/ISA/210 (patent family annex) (July 2022)

REFERENCES CITED IN THE DESCRIPTION

**Patent documents cited in the description**

- CN 202310118242X